# EUROPEAN PATENT APPLICATION

(11) **EP 4 293 812 A1**
(43) Date of publication of application: **20.12.2023**
(21) Application number: 23179238.3
(22) Date of filing: 14.06.2023
(51) Int. Cl.: H01M 50/569, G01R 31/364, H01R 4/18, H01R 13/05, H01R 13/20, H01R 43/16

(54) **SENSOR CONTACTING MEANS, CELL CONNECTOR TERMINAL, AND CELL CONNECTOR PLATE**

(30) Priority: 14.06.2022 DE 102022114957
(71) Applicant: TE Connectivity Germany GmbH, 64625 Bensheim (DE)
(72) Inventor: Callies, Thorsten, 64625 Bensheim (DE)
(74) Representative: Patentanwaltskanzlei WILHELM & BECK

(57) **Abstract**

The invention relates to an electrical sensor contacting means (10, 510) of an electrical cell connector plate (50) for a battery (0), in particular a traction battery (0) of a vehicle, the complete sensor contacting means (10, 510) being formed as a sensor contacting means (10, 510) which consists of only two parts (10, 50) and is only pluggable together, and which comprises a cell connector plate contact terminal (10) for an electrical cable (40) and a cell connector terminal (510), partially complementary thereto, of the cell connector plate (50) for the battery (0).

## Description

The invention relates to an electrical sensor contacting means of a cell connector plate. The invention also relates to an electrical cell connector plate contact terminal. The invention furthermore relates to an electrical cell connector plate and an electrical entity.

Nowadays, wiring harnesses for sensor monitoring of batteries are fixed to the cell connector plates of the batteries by ultrasonic welding (copper inner conductors of the cables to the cell connector plates made of aluminum). This technology is fraught with a certain degree of unmanageability. - It is an object of the invention to provide an alternative to ultrasonic welding of wire harnesses to cell connector plates of batteries.

The object of the invention is achieved by an electrical sensor contacting means of an electrical cell connector plate for a battery; by means of an electrical cell connector plate contact terminal for electrically contacting an electrical cell connector plate; by means of an electrical cell connector plate for a battery; and by means of an electrical entity, in particular an assembled electrical cable or battery for a vehicle, in particular a vehicle with an electric traction motor. - Advantageous developments, additional features and/or advantages of the invention can be gleaned from the dependent claims and the following description.

The sensor contacting means according to the invention is designed in such a way that an actual complete sensor contacting means is formed as a sensor contacting means which consists of merely two parts and which is only pluggable together, and which comprises a cell connector plate contact terminal for an electrical cable as well as a cell connector terminal, partially complementary thereto, of the cell connector plate for the battery. Here, of course, the cell connector plate contact terminal or the cell connector terminal may have a housing or the like.

The cell connector plate contact terminal can be formed as a pin terminal, a tab terminal or a socket terminal. Accordingly, the cell connector terminal can be formed as a socket terminal, a tab terminal or a pin terminal. The cell connector plate contact terminal and the cell connector terminal can be made of the same material, in particular aluminum, with the cable possibly being a copper cable. This eliminates the need for a difficult process for welding copper to aluminum.

The cell connector plate contact terminal can have a contact portion for the cell connector terminal and a connection portion for the cable. Here, the connection portion may be formed as a crimping portion in particular. A wall thickness of the cell connector plate contact terminal may be about 25%, about 30%, about 40%, about 50%, about 60%, about 70%, or about 75% of the wall thickness of the cell connector terminal. In other words, the cell connector plate contact terminal may be comparatively soft or flexible compared to the cell connector terminal. In particular, the cell connector plate contact terminal can be formed as a socket-like pin terminal and the cell connector terminal as a socket terminal.

The cell connector plate contact terminal can be formed bent together in a single layer and/or can have an elongate radial spring in portions. The preferably socket-like pin terminal as a male terminal in the present case thus has the spring properties of the sensor contacting means, whereas the cell connector terminal is preferably comparatively stiff compared to the cell connector plate contact terminal. The cell connector terminal can be bent out of a material layer of the cell connector plate. The cell connector plate contact terminal and/or the cell connector plate can be formed as explained below.

The cell connector plate contact terminal according to the invention has a contact portion and a connection portion, in particular formed as a crimping portion, for an electrical cable, the contact portion and the connection portion extending in an axial direction of the cell connector plate contact terminal. The cell connector plate contact terminal may be formed with its contact portion as a male terminal, which is bent together from a material layer in the circumferential direction of the cell connector plate contact terminal. Additionally or alternatively, the contact portion of the cell connector plate contact terminal can be bent together from a material layer in the circumferential direction at least in portions to form a radial spring which is elongate in the axial direction (cf. also above). In other words, a relevant cross-section of the contact portion has the form of a radial spring.

The elongate radial spring may have a substantially O-shaped slotted, U-shaped or V-shaped cross-section. Further, the elongate radial spring may be formed as a leg spring having two spring legs in a radial plane (cross-section of the contact portion) of the cell connector plate contact terminal. The leg spring of the cell connector plate contact terminal, that is to say a spring portion that can be sprung in a radial direction of the cell connector plate contact terminal in the axial direction of the cell connector plate contact terminal, takes up a torque at its legs (plugging into cell connector terminal) starting from its rest position during an angular and/or rotational movement, which it releases again during relaxation.

The spring legs of the leg spring can be mechanically coupled to each other only via a simple connection. In other words, the leg spring does not have a complete winding and can therefore also be referred to or formed as a leaf spring. For example (cf. below), the two side walls of the contact portion as the legs of the leg spring are mechanically coupled only via a simple bottom wall of the contact portion as a simple connection. In the cross-section (radial plane) of the leg spring, the free leg ends of the spring legs can be bent towards each other.

The contact portion can be formed substantially as a contact box, the electrical contact surface of which is formed on an outer periphery of the contact box. Here, the contact box is designed to be radially resilient in the cell connector plate contact terminal, i.e., the elongate radial spring is formed as a substantially box-shaped radial spring. Further, the contact portion may have substantially two side walls connected by a bottom wall and a preferably open top. Furthermore, the contact portion may have a substantially polygonal or substantially rectangular cross-section with preferably rounded corner regions or a substantially elliptical cross-section. Here, the substantially rectangular cross-section may of course also be square and the substantially elliptical cross-section may of course also be circular.

The contact portion can have on its outer side at least one cell connector terminal receptacle, on/in which a cell connector terminal of a cell connector plate can be received. The contact portion can have exactly or at least two radially substantially opposite cell connector terminal receptacles. A cell connector terminal receptacle can be constituted here by a radially resilient spring element and an axial stop as well as an outer side of the contact portion.

The contact portion, the contact box and/or the elongate radial spring can have exactly or at least one radially resilient spring element, or can have exactly or at least two radially substantially opposite radially resilient spring elements. Preferably, the respective spring element extends in the axial direction and protrudes somewhat radially from the respective side wall (about 25% to about 150% of a thickness of the material layer of the cell connector plate contact terminal).

The contact portion, the contact box and/or the elongate radial spring can have exactly or at least one axial stop, or can have exactly or at least two radially substantially opposite axial stops. Preferably, the respective axial stop extends in a radial direction and protrudes radially from the respective side wall (about 100% to about 300% of a thickness of the material layer of the cell connector plate contact terminal). In this regard, a respective axial stop may itself be designed to be resilient in the axial direction. A radial resilience of the respective axial stop in question is provided, for example, by the provision on the elongate radial spring.

A transition portion can be formed in the axial direction between the contact portion and the connection portion. The transition portion can serve here to connect the cell connector plate contact terminal to a reel. In embodiments, the cell connector plate contact terminal is formed free of an insulation crimping portion. The cell connector plate contact terminal can be part of a sensor contacting means according to the invention.

The cell connector plate according to the invention comprises a plate-shaped connector main body for electrically connecting a plurality of battery cells of a battery, the plate-shaped connector main body having a cell connector terminal for electrically contacting the cell connector plate. In this regard, the cell connector terminal can be formed as a socket terminal, a pin terminal, or a tab terminal.

The cell connector terminal can be electrically connected to the connector main body at least or only on one side, or at least or only on two sides. Furthermore, the cell connector terminal can be cut free from the connector main body and/or bent out of a plane of the connector main body. In this case, the cell connector terminal can protrude from the connector main body in the form of a splinter, the splinter-like cell connector terminal of course not being raised from the connector main body, but still being connected to it, preferably integrally (cf. below).

In embodiments, the cell connector terminal can be formed as a socket terminal having a substantially elliptical or polygonal inner cross-section and/or outer cross-section. A preferred elliptical inner cross-section and/or outer cross-section is in this case preferably a circular inner cross-section and/or outer cross-section. A preferred polygonal inner cross-section and/or outer cross-section is in this case preferably a square or rectangular inner cross-section and/or outer cross-section.

The cell connector terminal can be formed as a sleeve or a roll, which is preferably open at both axial end faces. In this case, the cell connector terminal can be formed in such a way that the cell connector plate contact terminal can be inserted into the sleeve or roll coming from both end faces; this is of course also applicable to other embodiments. The cell connector terminal can be slotted at a circumference, with a slot extending in the axial direction along a preferably complete extension of the cell connector terminal. Alternatively, it is possible to fix a free circumferential end of the cell connector terminal to the connector main body, for example by means of a weld spot.

The cell connector terminal can be formed by means of a single bent-over tab or by means of two tabs of the connector main body bent towards each other. In this case, the connector main body assumes the function of a base for the cell connector terminal. The cell connector plate can be easily manufactured, for example, by a die stamping process, inclusive of its cell connector terminal, possibly using a mandrel. Furthermore, the cell connector plate can have welding areas as electrical contact devices for the battery terminals, measuring recesses for the battery terminals, electrical power contact devices, mechanical and possibly thermal bridging areas (beads), etc. The cell connector terminal of the cell connector plate can be part of a sensor contacting means according to the invention.

The cell connector plate contact terminal or the cell connector plate can be provided in one piece, materially in one piece, or can be integrally formed with its cell connector terminal. - A one-piece design is understood to be a design of the cell connector plate contact terminal or of the cell connector plate with its cell connector terminal, in which its individual parts are fixed to one another in a non-positively and/or positively-locking manner and can preferably be separated again into its individual parts without damage. In the case of a multi-part design, a non-positively and/or positively locking connection would (necessarily) be absent or a bond would be established by means of a third part.

A materially (adhesively) one-piece design is understood to be a design of the cell connector plate contact terminal or of the cell connector plate with its cell connector terminal in which its individual parts are fixed to each other in a materially bonded manner (by welding, soldering, adhesive bonding, etc.) and preferably cannot be separated into its individual parts without damage. In this case, the bond can further be produced by means of a non-positively and/or positively locking connection (not in the case of an integral design).

An integral design is understood to mean a design of the cell connector plate contact terminal or of the cell connector plate with its cell connector terminal in which there is only one single component part, which can be separated only by being destroyed. The component is manufactured from a single original piece (metal sheet, blank, etc.) and/or from a single original mass (molten metal), which in turn is inevitably integral. An internal bond is performed by means of adhesion and/or cohesion. - In all embodiments, a coating, deposition, electroplating, etc. may additionally be present.

The cell connector plate contact terminal or the cell connector terminal may be formed substantially entirely merely as a single layer. Further, the cell connector plate contact terminal or the cell connector terminal may not be formed as a power terminal for a battery electric current. That is to say, the cell connector plate contact terminal and/or the cell connector terminal is or are formed as a voltage tap, in particular for a sensor application.

An electrical connector according to the invention has at least one cell connector terminal according to the invention or a cell connector plate according to the invention and a housing, in particular a housing made of plastic. An electrical plug connection according to the invention comprises at least one cell connector terminal, according to the invention where applicable, and a cell connector plate, according to the invention where applicable. The entity according to the invention comprises at least one component and a cell connector plate contact terminal according to the invention and/or a cell connector plate according to the invention.

Such an entity according to the invention is formed, for example, as an electrical component, an assembled electrical cable, an electrical module, an electrical device, a battery (accumulator), an electrical apparatus, an electrical unit, etc. In this regard, the entity may of course comprise a connector according to the invention and/or a plug connection according to the invention. - A (pre-)assembled cable (entity) according to the invention in this case has, in particular, an electrical cable (component), where applicable a connector housing (component) and a cell connector terminal according to the invention. In particular, a battery (entity) according to the invention comprises at least one battery module (component), where applicable a battery housing (component) and a cell connector plate according to the invention.

A vehicle - in particular a motor vehicle (road vehicle), but also: a rail vehicle, watercraft and/or aircraft - with an electric traction motor is understood to be a motor vehicle which, in addition to its electric traction motor, can have a further non-electric drive, such as an internal combustion engine. In other words, a vehicle with an electric traction motor can be understood to mean, for example, a hybrid electric vehicle, an electric vehicle (electric motor drive only), a fuel cell vehicle, etc.

The invention is explained in greater detail below on the basis of exemplary embodiments with reference to the appended schematic drawings which are not to scale. Sections, elements, component parts, units, components and/or patterns which have an identical, unique or analogous configuration and/or function are identified by the same reference symbols in the description of the figures (see below), the list of reference symbols, the patent claims and in the figures (Figs) of the drawings. A possible alternative which is not explained in the description of the invention (see above), is not illustrated in the drawings and/or is not definitive, a static and/or kinematic reversal, a combination etc. with respect to the exemplary embodiments of the invention or a component, a pattern, a unit, a component part, an element or a section thereof, can further be gleaned from the list of reference symbols and/or the description of the figures.

In the case of the invention, a feature (section, element, component part, unit, component, function, variable etc.) can be of positive configuration, that is to say present, or of negative configuration, that is to say absent. In this specification (description (description of the invention (see above), description of the figures (see below)), list of reference symbols, patent claims, drawings), a negative feature is not explained explicitly as a feature if value is not placed on it being absent according to the invention. That is to say, the invention which is actually made and is not constructed by way of the prior art consists in omitting the said feature.

A feature of this specification can be used not only in a specified manner and/or way, but rather also in another manner and/or way (isolation, combination, replacement, addition, on its own, omission, etc.). In particular, it is possible, in the description, the list of reference symbols, the patent claims and/or the drawings, to replace, add or omit a feature in the patent claims and/or the description on the basis of a reference symbol and a feature which is assigned to it, or vice versa. Furthermore, a feature in a patent claim can be interpreted and/or specified in greater detail as a result.

The features of the description can also be interpreted as optional features (in view of the (initially mostly unknown) prior art); that is to say, each feature can be considered to be an optional, arbitrary or preferred feature, that is to say a feature which is not mandatory. Therefore, a separation of a feature, possibly including its periphery, from an exemplary embodiment is possible, it then being possible for the said feature to be transferred to a generalized inventive concept. The absence of a feature (negative feature) in an exemplary embodiment shows that the feature is optional in relation to the invention. In addition, in the case of a type term for a feature, a generic term for the feature can also be implicitly understood (possibly further hierarchical breakdown into subgenus, etc.), as a result of which a generalization of the feature is possible, for example with consideration of equivalent effect and/or equivalence.

In the merely exemplary figures (Figs):

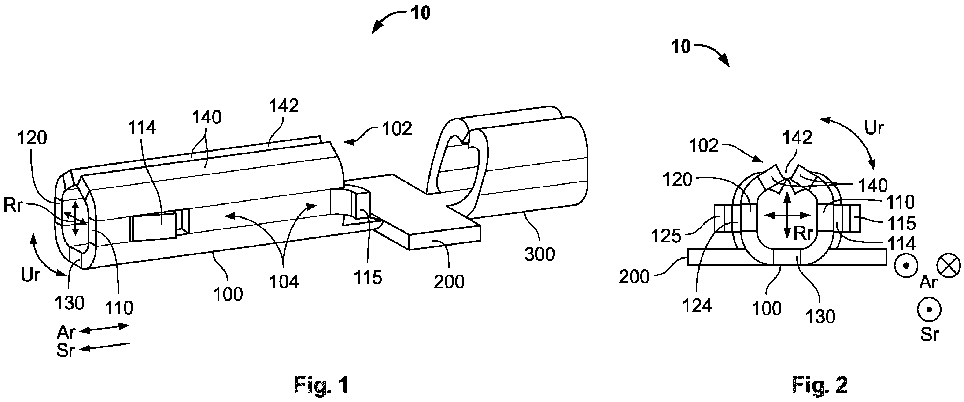

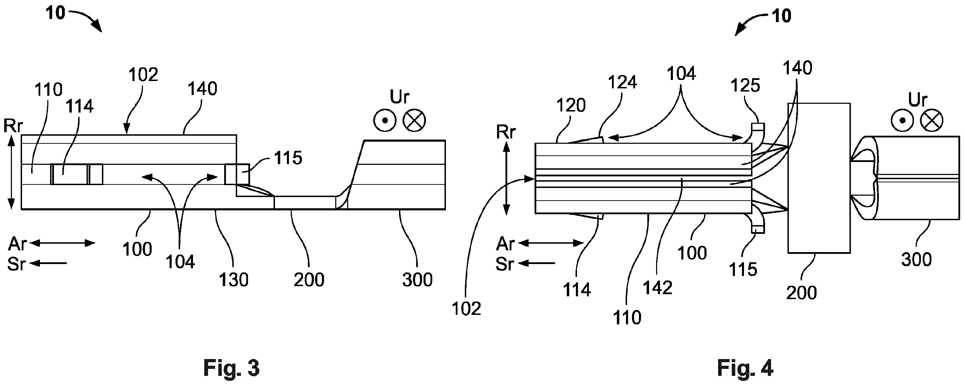

figures 1 to 4 show an embodiment of an electrical cell connector plate contact terminal for electrically contacting a cell connector terminal of a cell connector plate for batteries, in a perspective view (figure 1), a front end-side view (figure 2), a side view (figure 3) and a top view (figure 4), and

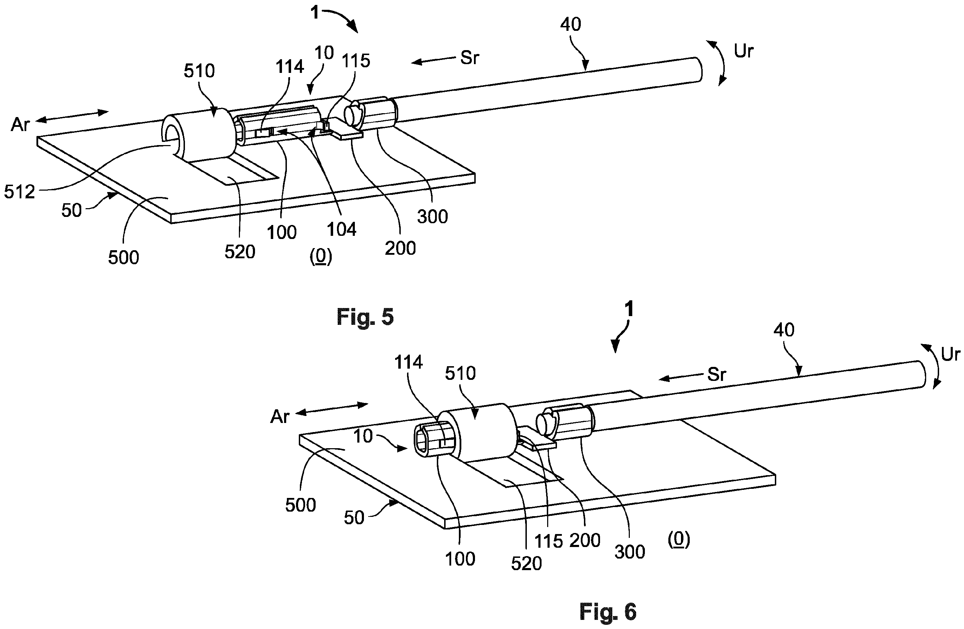

figures 5 and 6 show a set-up of an electrical sensor contacting means of an electrical cell connector plate formed of the cell connector plate contact terminal and the cell connector terminal partially complementary thereto, in a state substantially immediately prior to plugging together (figure 5) and in a plugged-together state (figure 6).

The invention is explained in greater detail below with reference to exemplary forms of an embodiment of a variant of an electrical cell connector plate contact terminal 10 (in particular, figures 1 to 4) for an electrical cable 40, for electrically contacting an electrical cell connector plate 50, and with reference to exemplary forms of an embodiment of a variant of an electrical cell connector plate 50 having a cell connector terminal 510 (figures 5 and 6), in each case for a battery 0, in particular a traction battery 0 of an electric vehicle.

The invention can be used in general in the electrical sector in the case of an electrical entity. The exception to this is ground-based electrical power engineering (except, of course, for voltage taps, for example for sensor applications or the like). Moreover, although the invention is described and illustrated further in greater detail by way of preferred exemplary embodiments, the invention is not restricted by the disclosed exemplary embodiments, but rather is of more fundamental nature. Other variations can be derived therefrom and/or from the above (description of the invention), without departing from the scope of protection of the invention.

The drawings show only those physical sections of a subject matter of the invention which are necessary for understanding the invention. Designations such as connector and mating connector, terminal and mating terminal etc. are to be interpreted synonymously, that is to say may be mutually interchangeable. In the following, the explanation of the invention with reference to the drawing refers to an axial direction Ar (one choice of which is the plugging direction Sr), a radial direction Rr and a circumferential direction Ur of the cell connector plate contact terminal 10 and the cell connector terminal 510.

Figures 1 to 4 show the cell connector plate contact terminal 10, this having three portions 100, 200, 300, a contact portion 100, a transition portion 200, and a connection portion 300, which are integrally formed with each other and are arranged one after the other in the axial direction Ar. The connection portion 300 serves for electrically connecting the cable 40 and is formed as a wire crimping portion and preferably does not have an insulation crimping portion, but may have one. The transition portion 200 between the connection portion 300 and the contact portion 100 is formed in the present case for connecting the cell connector plate contact terminal 10 to a reel.

The cell connector plate contact terminal 10, which is formed as a crimp terminal 10, is bent together from a single material layer and is thereby given a substantially socket-like form overall. In this case, the cell connector plate contact terminal 10 is preferably formed substantially in a single layer on substantially all sides. That is to say, there is no side and/or substantially no portion of the cell connector plate contact terminal 10 at which it is formed in a double-layer or multiple-layer configuration by its constituent material layer. That is to say, the cell connector plate contact terminal 10 has a single structure.

The contact portion 100 serves for electrically contacting the cell connector terminal 510. The contact portion 100 makes the cell connector plate contact terminal 10 a male terminal, with the contact portion 100 being formed as a socket-like contact box which is hollow on the inside. The male contact portion 100 or the contact box has a surface on its outer periphery for electrically contacting the cell connector terminal 510 (cf. figures 4 and 6) and is formed at least in portions as a radial spring 102; 110, 130, 120. Preferably, substantially the entire contact portion 100 in the axial direction Ar is formed as an elongate radial spring 102; 110, 130, 120. - Another configuration of the cell connector plate contact terminal 10, such as a socket terminal or tab terminal, is of course applicable.

A cross-section of the radial spring 102; 110, 130, 120 can be seen clearly in figure 2. The radial spring 102; 110, 130, 120 comprises two spring legs 110, 120 that are resilient with respect to each other in the radial direction Rr. Starting from their rest position, the two spring legs 110, 120 can be pushed together or are compressible radially Rr, allowing the contact portion 100 to be plugged into the cell connector terminal 510. In the plugged-in state of the contact portion 100, the spring legs 110, 120 spring open in the radial direction Rr and thus press an outer side of the contact portion 100 against an inner side of the cell connector terminal 510 (cf. figure 6).

In the embodiment shown, the contact portion 110 comprises, starting from a bottom wall 130, on the one hand (on the right in figure 2), a first side wall 110 and, on the other hand (left in figure 2), a second side wall 120, the side walls 110, 120 being bent towards one another at their free, i.e. upper ends. These regions of the side walls 110, 120 which are bent towards each other form a slotted (spring slot 142) ceiling 140 of the contact portion 100. This gives the contact portion 110 an O-shaped slotted cross-section. Other cross sections such as elliptical, polygonal, U-shaped, V-shaped, etc. are of course applicable.

Here, the O-shaped cross-section of the contact portion 110 can be formed in particular as follows. The bottom wall 130 and the two side walls 110, 120 each have a rectilinear portion. The respective rectilinear portions of the side walls 110, 120 each form a rounded corner region with the base wall 130. Similarly, the side walls 110, 120 opposite the bottom wall 130 may also have rounded corner regions at which there are short rectilinear portions between which there is formed the spring slot 42 of the ceiling 140 of the contact portion 100.

The first side wall 110, the bottom wall 130 and the second side wall 120 here form the radial spring 102; 110, 130, 120 in the contact portion 110 or as the contact portion 110. The spring slot 142 in the top 140, which divides it into two portions, allows the radial spring 102; 110, 130, 120 to function, on the one hand, and can be dimensioned, on the other hand, such that it cannot be compressed radially Rr too much. - Instead of the radial spring 102; 110, 130, 120, the contact portion 100 or a portion of the contact portion 100 can be formed as a functionally similar leg spring or a functionally similar leaf spring, or the radial spring 102; 110, 130, 120 can be formed as such a spring.

A cell connector terminal receptacle 104 is preferably formed externally on the contact portion 100, in particular externally on a side wall 110, 120. The cell connector terminal receptacle 104 serves to fix the contact portion 100 in the cell connector terminal 510, or vice versa. For this purpose, the cell connector terminal receptacle 104 has, on the one hand, preferably at the front of the contact portion 100, a radially Rr spring-loadable error element 114, 124, and, on the other hand, preferably at the rear of the contact portion 100, a possibly axially Ar spring-loadable axial stop 115, 125. Here, the cell connector terminal receptacle 104 is formed in the axial direction Rr between the spring element 114, 124 and the axial stop 115, 125. That is to say, the receptacle 104 is accessible radially Rr from outside the contact portion 100.

The spring element 114, 124 is cut out of or released from a wall 110, 120, 130 of the contact portion 100 ((die) stamping and bending process) and protrudes somewhat radially from the wall 110, 120, 130, analogously to a locking lance. The axial stop 115, 125 is preferably formed as a tab which preferably projects radially away from the contact portion 100 at one end thereof. Alternatively, the axial stop 115, 125 can be formed analogously to the spring element 114, 124 and/or the spring element 114, 124 can be formed analogously to the axial stop 115, 125. - Preferably, the contact portion 110 has two cell connector terminal receptacles 104, 104 opposite each other at the side walls 110, 120.

Figures 5 and 6 show, in addition to the cell connector plate 50, a (pre-)assembled electrical cable 1. Here, the (pre-)assembled cable 1 comprises the cell connector plate contact terminal 10 and also the cable 40 electrically connected thereto. In this case, the cable 40 is attached by its solid conductor, its sector-pressed or compacted conductor or its stranded conductor to the connection portion 300, preferably is crimped to the latter. Another technology, such as soldering welding, or adhesive bonding for attaching the conductor to the connection portion 300 is of course applicable.

Figures 5 and 6 show the cell connector terminal 510 provided on a connector main body 500 of the cell connector plate 50. In particular, the cell connector terminal 510 is formed as a bushing terminal 510 and is preferably integrally formed with the connector main body 500. The terminal 510 is cut free from the connector main body 500 on three sides and is rolled or bent out of the plane of the connector main body 500, so that the cell connector terminal 510 protrudes from the connector main body 500 as a sleeve 510 or a roll 510. This leaves a recess 520, particularly a through-recess 500, in the connector main body 500. - Another configuration of the cell connector terminal 510, such as a pin or tab terminal, is of course applicable.

The cell connector terminal 510 has a notionally simple structure here and is constituted from a merely round-bent, smooth material layer. A free end of a tab bent to form the cell connector terminal 510 may be seated here on the connector main body 500 or may be arranged in the cell connector plate 50 with a slot 510 spaced therefrom. In the first case, the free end of the cell connector terminal 510 can be fixedly connected to the connector main body 500, for example, welded, soldered or adhesively bonded.

Furthermore, figures 5 to 6 show the (pre-)assembled cable 1 when the cell connector plate contact terminal 10 is plugged into the cell connector terminal 510. When the cell connector plate contact terminal 10 is plugged into the cell connector terminal 510, the radial spring 102; 110, 130, 120 of the contact portion 100 is radially compressed and the contact portion 100 thereupon slides into the socket-like cell connector terminal 510, its front end passing through the entire cell connector plate contact terminal 510. At this point, the spring elements 114, 124 are fully plugged through the terminal 510. Plugging the cell connector plate contact terminal 10 into the cell connector terminal 510 can be facilitated by insertion chamfers (not shown) on a free end face of the contact portion 100.

In a plugged-together state of the cell connector plate contact terminal 10 with the cell connector terminal 510 (cf. figure 6), the cell connector terminal 510 has been seated in the cell connector terminal receptacles 104, 104 of the contact portion 100. Here, one end face of the cell connector terminal 510 rests against the spring elements 114, 124 projecting radially Rr from the contact portion 100. An end face of the cell connector terminal 510 opposite this end face axially Ar sits here against the axial stops 115, 125 protruding radially Rr from the contact portion 100.

### List of reference symbols

- 0: battery
- 1: (pre-)assembled (electrical) cable

- 10: (electrical) cell connector plater contact terminal
- 40: (electrical) cable
- 50: (electromechanical) cell connector plate for batteries 0

- 100: contact portion
- 102: (elongate) radial spring
- 104: cell connector terminal receptacle
- 110: first side wall, wall; optionally formed as a leg spring
- 114: radially resilient spring element
- 115: (optionally resilient) axial stop
- 120: second side wall, wall; optionally formed as a leg spring
- 124: radially resilient spring element
- 125: (optionally resilient) axial stop
- 130: bottom wall, wall
- 140: top
- 142: spring slot
- 200: transition portion
- 300: connection portion, in particular crimping portion

- 500: connector main body
- 510: (electrical) cell connector terminal
- 512: slot
- 520: recess

- Ar: axial direction(s) (undirected)
- Rr: radial direction(s) (undirected)
- Sr: plugging direction (directed)
- Ur: circumferential direction(s) (undirected)

## Claims

1. Electrical sensor contacting (10, 510) of an electrical cell connector plate (50) for a battery (0), in particular a traction battery (0) of a vehicle, **characterised in that**
an actual complete sensor contacting (10, 510) is formed as a pluggable sensor contacting (10, 510) which consists of only two parts (10, 50), and which
comprises a cell connector plate contact-terminal (10) for an electrical cable (40) and a cell connector terminal (510), partially complementary thereto, of the cell connector plate (50) for the battery (0).

2. Electrical sensor contacting (10, 510) as claimed in the preceding claim, wherein:
□ the cell connector plate contact-terminal (10) has a contact portion (300) for the cell connector terminal (510) and a connection portion (300) for the cable (40),
□ a wall thickness of the cell connector plate contact-terminal (10) is about 25%, about 30%, about 40%, about 50%, about 60%, about 70% or about 75% of the wall thickness of the cell connector terminal (510), and/or
□ the cell connector plate contact-terminal (10) is formed as a socket-like pin terminal (10) and the cell connector terminal (510) is formed as a socket terminal (510).

3. Electrical sensor contacting (10, 510) as claimed in one of the preceding claims, wherein:
□ the cell connector plate contact-terminal (10) is bent together as a single layer and/or has an elongated radial spring (102) in portions,
□ the cell connector terminal (510) is bent out of a material layer of the cell connector plate (50), and/or
□ the cell connector plate contact-terminal (10) and/or the cell connector plate (50) is formed as claimed in one of the following claims.

4. Electrical cell connector plate contact-terminal (10) for electrically contacting an electrical cell connector plate (50) for a battery (0), in particular a traction battery (0) of a vehicle, having
a contact portion (100) and a terminal portion (300), in particular formed as a crimping portion (300), for an electrical cable (40), the contact portion (100) and the terminal portion (300) extending in an axial direction (Ar) of the cell connector plate contact-terminal (10), **characterised in that**
the cell connector plate contact-terminal (10) is formed with its contact portion (100) as a male terminal (10), which is bent together from a material layer in a circumferential direction (Ur) of the cell connector plate contact-terminal (10), and/or
the contact portion (100) of the cell connector plate contact-terminal (10) is bent together from a material layer in a circumferential direction (Ur) at least in portions to form a radial spring (102) elongated in the axial direction (Ar).

5. Electrical cell connector plate contact-terminal (10) as claimed in the preceding claim, wherein:
□ the elongated radial spring (102) has a substantially O-shaped slotted, U-shaped or V-shaped cross-section,
□ the elongated radial spring (102) is formed as a leg spring (102) with two spring legs (110, 120) in a radial plane of the cell connector plate contact-terminal (10), and/or
□ the spring legs (110, 120) of the leg spring (102) are mechanically coupled to one another only via a simple connection (130).

6. Electrical cell connector plate contact-terminal (10) as claimed in one of the preceding claims, wherein the contact portion (100):
□ is formed substantially as a contact box of which the electrical contact surface is arranged on an outer periphery of the contact box,
□ has substantially two side walls (110, 120) connected by a bottom wall (130) and a preferably open top wall (140), and/or
□ has a substantially rectangular cross-section with preferably rounded corner regions or a substantially elliptical cross-section.

7. Electrical cell connector plate contact-terminal (10) as claimed in one of the preceding claims, wherein:
□ the contact portion (100) has at its outer side at least one cell connector terminal receptacle (104) at/in which a cell connector terminal (510) of a cell connector plate (50) can be received,
□ the contact portion (100) has exactly or at least two radially (Rr) substantially opposite cell connector terminal receptacles (104), and/or
□ a cell connector terminal receptacle (104) is constituted by a radially resilient spring element (114, 124) and an axial stop (115) and also an outer side of the contact portion (100).

8. Electrical cell connector plate contact-terminal (10) as claimed in one of the preceding claims, wherein the contact portion (100), the contact box and/or the elongated radial spring (102) comprises exactly or at least one radially resilient spring element (114, 124), or comprises exactly or at least two radially (Rr) substantially opposite radially resilient spring elements (114, 124).

9. Electrical cell connector plate contact-terminal (10) as claimed in one of the preceding claims, wherein the contact portion (100), the contact box and/or the elongate radial spring (102) comprises exactly or at least one axial stop (115, 125), or comprises exactly or at least two radially (Rr) substantially opposite axial stops (115, 125).

10. Electrical cell connector plate contact-terminal (10) as claimed in one of the preceding claims, wherein:
□ a transition portion (200) is arranged in the axial direction (Ar) between the contact portion (100) and the connection portion (300),
□ the cell connector plate contact-terminal (10) is free of an insulation crimping portion, and/or
□ the cell connector plate contact-terminal (10) is part of a sensor contacting (10, 510) as claimed in one of the preceding claims.

11. Electrical cell connector plate (50) for a battery (0), in particular a traction battery (0) of a vehicle, having
a plate-shaped connector main body (500) for electrically connecting a plurality of battery cells of a battery, **characterised in that**
the plate-shaped connector main body (500) has a cell connector terminal (510) for electrically contacting the cell connector plate (50).

12. Electrical cell connector plate (50) as claimed in the preceding claim, wherein the cell connector terminal (510):
□ is electrically connected to the connector main body (500) at least or only on one side, or at least or only on two sides,
□ is cut free from the connector main body (500) and bent out of a plane of the connector main body (500), and/or
□ is formed as a socket terminal (510) having a substantially elliptical or polygonal inner cross-section and/or outer cross-section.

13. Electrical cell connector plate (50) as claimed in one of the preceding claims, wherein the cell connector terminal (510):
□ is formed as a sleeve (510) or roll (510) which is preferably open at both axial (Ar) end faces,
□ is slotted at a circumference, a slot (512) extending in an axial direction (Ar) along a full extent of the cell connector terminal (510),
□ is formed of the connector main body (500) by means of a single bent-over tab or by means of two tabs bent towards each other, and/or
□ of the cell connector plate (50) is part of a sensor contacting (10, 510) as claimed in one of the preceding claims.

14. Electrical cell connector plate contact-terminal (10) or electrical cell connector plate (50) as claimed in one of the preceding claims, wherein:
□ the cell connector plate contact-terminal (10) or the cell connector plate (50) is provided in one piece, materially in one piece, or is integrally formed with its cell connector terminal (510),
□ the cell connector plate contact-terminal (10) or the cell connector terminal (510) is formed substantially entirely only in a single layer, and/or
□ the cell connector plate contact-terminal (10) or the cell connector terminal (510) is not formed as a power terminal (10, 510) for a battery electric current.

15. Electrical entity (0, 1), in particular assembled electrical cable (1) or battery (0) for a vehicle, in particular a vehicle with an electric traction motor, **characterised in that**
the entity (0, 1) comprises at least one component, a cell connector plate contact-terminal (10) as claimed in one of the preceding claims and/or a cell connector plate (50) as claimed in one of the preceding claims.
